Europäisches Patentamt

European Patent Office

Office européen des brevets

(11) Publication number: **0 146 358**
A1

# EUROPEAN PATENT APPLICATION

(21) Application number: 84308729.7

(22) Date of filing: 14.12.84

(51) Int. Cl.⁴: **F 16 F 1/28**, B 60 G 11/12

(30) Priority: 20.12.83 GB 8333846
11.08.84 GB 8420460

(43) Date of publication of application: 26.06.85
Bulletin 85/26

(84) Designated Contracting States: IT

(71) Applicant: GKN TECHNOLOGY LIMITED, Birmingham
New Road, Wolverhampton WV4 6BW (GB)

(72) Inventor: Reynolds, David George, 3 Ermington Road,
Park Hall Wolverhampton West Midlands (GB)
Inventor: Donowski, Steven, 13 Goodrest Avenue,
Halesowen West Midlands (GB)

(74) Representative: Dodd, Graham Marshall et al, Guest
Keen and Nettlefolds plc Group Patents and Licensing
Department P.O. Box 55 Ipsley House Ipsley Church
Lane, Redditch Worcestershire B98 0TL (GB)

(54) Springs of composite material.

(57) A leaf spring 10, 20 of composite, fibre reinforced plastics
material, with an end portion 11, 21 defining a transverse re-
cess in which an attachment member in the form of a bush 13,
23 lies. The attachment member and spring end portion are at
least partially enclosed by a material such as a plastics material
which has been moulded therearound to secure the attachment
member and spring together.

ACTORUM AG

GMD/P83.082    SPRINGS OF COMPOSITE MATERIAL

This invention relates to leaf springs made of composite, fibre reinforced resin, material. More particularly, the invention relates to the provision of means whereby such a spring may be secured to, for example, a motor vehicle, where it is to be used.

The use of composite material to manufacture leaf springs enable a considerable saving in weight to be achieved as compared with conventional steel leaf springs. The composite material may comprise glass fibres set within a matrix of a cured resin, for example an epoxy resin, and by the selection of suitable fibres, and orientation and disposition thereof within the spring, a spring can be manufactured which is considerably lighter than a steel leaf spring having the same properties. This is particularly advantageous for use in motor vehicles. However, one aspect of the design of leaf springs of composite material which causes some difficulty is at the ends of the spring where it is required to be attached to the vehicle. Manufacturing processes used with composite materials do not readily permit an eye to be formed at the spring end, as can easily be done in the case of a steel spring.

It has been proposed, in EP-A-0070122, that an end fitting for a leaf spring made of composite material may comprise an attachment member lying within a recess extending transversely of an end portion of the spring, with a metal clamping member extending around the attachment member and the end portion of the spring, longitudinally of the spring. The clamping member is held to the spring adjacent the end portion thereof so that the attachment member, which preferably is a tubular bush, is firmly held in the recess of the spring. The clamping member is of sheet metal, and various means for holding it to the spring have been proposed. This design performs satisfactorily, but can entail the use of a large number of separate components, with consequent expense, and difficulty in manufacture.

It is the object of the present invention to provide an improved means by which a leaf spring of composite material may be mounted, at its end, in apparatus or equipment, e.g. a motor vehicle, where it is to be used.

The present invention provides a leaf spring of composite, fibre reinforced resin, material including an end portion defining a recess extending transversely of the spring, and an attachment member lying in said recess, wherein the attachment member and end portion are at least partially enclosed by a material which has been moulded around said end portion and attachment member in-situ to secure the attachment member and spring together.

The moulded material may be a plastics material, for example, a polyurethane, an epoxy resin, or a material such as an appropriate grade of nylon. The material may itself incorporate fibre, eg glass fibre, reinforcement. Such materials can be injection moulded into a suitable die in which the end portion of the spring and the attachment member are placed. A process such as reaction injection moulding (RIM) may be utilised.

The attachment member may comprise a metal-rubber-metal bush, for receiving a bolt by which the spring is attached to a shackle or the like, or may comprise a tubular bush into which such a metal-rubber-metal bush can be fitted.

Keying formations may be provided, into which the covering material can flow in its moulding process to enhance security of the attachment member.

Advantages arising from use of the invention are that the spring and attachment member are held together without the use of clamps, bolts penetrating the spring, or like components. A rigid assembly is produced, and manufacturing tolerances are automatically taken up by the moulding process. With choice of suitable materials, the attachment member is protected against corrosion without requiring subsequent coating processes, and the assembly provides a damping effect against noise transmission.

The invention also provides a method, as above described, of providing a composite leaf spring with means for securing it to another component.

The invention will now be described by way of example with reference to the accompanying drawings, of which:-

Figure 1 is a plan view of an end of a spring, according to the invention;

Figure 2 is a side view of the spring of Figure 1.

Figure 3 is a plan view of a further embodiment of the invention, showing diagramatically manufacture thereof;

Figure 4 is a side view of the spring of Figure 3.

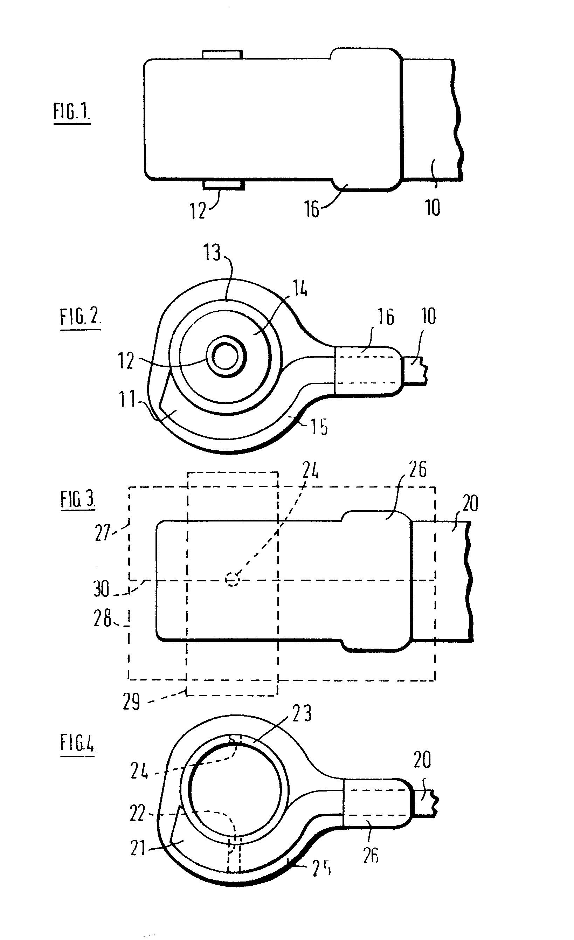

Referring firstly to Figures 1 and 2 of the drawings, there is illustrated a leaf spring 10 made of composite material such as glass fibres set in an epoxy resin. An end portion 11 of the spring defines a part circular recess extending transversely across the spring. Lying in the recess is an attachment member in the form of a bush with inner and outer tubular metal elements 12, 13 respectively and an intermediate annular rubber element 14. Such bushes are well known.

The bush is secured to the spring by a covering 15 of plastics material, which has been moulded in-situ around the bush and spring end portion. A part 16 of the covering extends a short distance around the spring adjacent its end portion. The covering material is one which is capable of being moulded around the spring end portion and bush while in flowable form, and which subsequently solidifies either by a chemical reaction or temperature change to secure the bush and spring together. Suitable materials for this purpose have been referred to above, e.g. plastics materials such as polyurethanes, epoxy resins, or an appropriate grade of nylon, possibly glass fibre filled.

The assembly of bush and spring would be manufactured by placing these two components in a suitable mould or die set, into which the covering material can be introduced. The material could be injection moulded, or possibly poured in under gravity. A process such as reaction injection moulding could be used. Whichever technique is used, the mould or die must provide for prevention of the covering material penetrating the interior of the tubular element 12 of the bush, or preventing the inner and outer tubular elements 12, 13 of the bush from undergoing the slight relative movement which enables the bush to fulfill its damping function.

Referring now to Figures 3 and 4 of the drawings, these show the end portion of a leaf spring 20 of composite, fibre enforced plastics, material. A part circular transverse recess is defined by the end portion 21 of the spring, and in this end portion lies an attachment member in the form of a tubular bush 23. The bush is secured to the spring by a covering 25 of a plastics material as above, moulded around the bush and end portion of the spring. A part 26 of the covering material extends around a short part of the spring 20 adjacent its end portion 21.

In this embodiment, the bush 23 is provided with keying formations such as diametrically opposed apertures as 24, into which the covering material flows during its moulding process, so as to enhance the security of attachment of the bush to the spring. Such apertures may be provided in the bush by drilling it, possibly in place in the recess in the spring end portion whereupon an aperture 22 may be provided in the spring end portion itself to provide an even more secure keying effect.

The method of thus securing the attachment member to the spring is shown diagramatically in Figure 3. Two halves of a die set are shown in outline at 27, 28, fitting together from the sides of the spring and joining at a plane 30. To prevent penetration of the covering material to the inside of the bush 23, a mandrel 29 is a close fit therein, and in the die parts to present leakage of the material during moulding. A seal would be provided where the spring adjacent its end portion emerges from the die parts. One or more places for entry of the covering material to the interior of the die parts would, of course, be provided, positioned as required and as well known to those skilled in the art, to ensure satisfactory material flow during the moulding process.

After the covering material has set, either by change in temperature or by a chemical reaction, the die halves can be parted, the spring end removed therefrom, and the mandrel 29 withdrawn from the bush 23. If required, a rubber and metal bush can then be pressed into the bush 23. The rubber-metal bush is replaceable by pressing out of the bush 23, if required.

It will, of course, be appreciated that more apertures for keying could be provided in the bush and/or spring end portion, to provide a greater keying effect. Alternatively, or in addition, the external surface of the bush could be knurled or otherwise configured to provide a keying effect, and the end portion of the spring could deliberately be provided with a rough surface with which the covering material can key.

CLAIMS

1. A leaf spring of composite, fibre reinforced resin, material including an end portion (11, 21) defining a recess extending transversely of the spring, and an attachment member (13, 23) lying in said recess, wherein said end portion (11, 21) and attachment member (13, 23) are at least partially enclosed by a material (15, 25) which has been moulded around said end portion and attachment member in situ, to secure the attachment member and spring together.

2. A spring according to Claim 1 wherein said attachment member is a bush (12, 13, 14; 23) defining an aperture extending transversely of the spring.

3. A spring according to Claim 1 or Claim 2 wherein said covering material is a plastics material.

4. A spring according to any one of the preceding claims wherein said material is injection moulded around said attachment member and spring end portion.

5. A spring according to any one of the preceding claims wherein said material has keying engagement with said attachment member and/or said spring end portion.

6. A method of providing a leaf spring of composite, fibre reinforced resin, material, with means for securing it to another component, comprising forming an end portion (11, 21) of the spring to define a recess extending transversely of the spring, placing an attachment member (13, 23) to lie in said recess, placing said spring end portion having said attachment member in a mould, introducing a material in flowable form into said mould at least partially to enclose said end portion and attachment member, and causing said material to set, to secure said attachment member to said spring end portion and permit removal from said mould.

FIG.1.

12    16    10

FIG.2.

13
14
16    10
12
11
15

FIG.3.

24    26
20
27
30
28
29

FIG.4.

23
24
20
22
21
26
25

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PATENTS ABSTRACTS OF JAPAN, vol. 3, no. 105 (M-71), 5th September 1979, page 57 M 71; & JP - A - 54 79343 (TORAY K.K.) 25-06-1979 | 1-3,5,6 | F 16 F 1/28 B 60 G 11/12 |
| X | PATENTS ABSTRACTS OF JAPAN, vol. 3, no. 101 (M-70), page 2 M 70; & JP - A - 54 74057 (TORAY K.K.) 13-06-1979 | 1-3,5,6 | |
| A | PATENTS ABSTRACTS OF JAPAN, vol. 6, no. 29 (M-113)[907], 20th February 1982; & JP - A - 56 147 934 (CHUO HATSUJIYOU K.K.) 17-11-1981 * Figure 3 * | 1-3 | |
| A | EP-A-0 005 916 (G.K.N. GROUP SERVICES LTD.) * Page 7, line 8 - page 8, line 11; figures 4,5 * | 1-3,6 | **TECHNICAL FIELDS SEARCHED (Int. Cl.4)** F 16 F 1/00 B 60 G 11/00 |

The present search report has been drawn up for all claims

| Place of search | Date of completion of the search | Examiner |
|---|---|---|
| THE HAGUE | 15-03-1985 | KEEN C.H. |